(19) Europäisches Patentamt / European Patent Office / Office européen des brevets

(11) **EP 3 706 366 B1**

(12) **EUROPEAN PATENT SPECIFICATION**

(45) Date of publication and mention of the grant of the patent:
**10.09.2025 Bulletin 2025/37**

(21) Application number: **18873086.5**

(22) Date of filing: **22.06.2018**

(51) International Patent Classification (IPC):
*H04L 41/5009* (2022.01)    *B60L 53/60* (2019.01)

(52) Cooperative Patent Classification (CPC):
**H04L 43/16; H04L 41/5009; H04L 41/5025;**
B60L 53/60; Y02T 10/70; Y02T 10/7072;
Y02T 90/12

(86) International application number:
**PCT/CN2018/092333**

(87) International publication number:
**WO 2019/085516 (09.05.2019 Gazette 2019/19)**

(54) **SERVICE SUPPORT SYSTEM AND METHOD, INTELLIGENT SERVICE ABILITY ADJUSTMENT SYSTEM AND METHOD, AND COMPUTER DEVICE**

DIENSTUNTERSTÜTZUNGSSYSTEM UND -VERFAHREN, SYSTEM UND VERFAHREN ZUR INTELLIGENTEN DIENSTFÄHIGKEITSANPASSUNG UND COMPUTERVORRICHTUNG

SYSTÈME ET PROCÉDÉ DE PRISE EN CHARGE DE SERVICE, SYSTÈME ET PROCÉDÉ DE RÉGLAGE DE CAPACITÉ DE SERVICE INTELLIGENT, ET DISPOSITIF INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2017  CN 201711047935**

(43) Date of publication of application:
**09.09.2020  Bulletin 2020/37**

(73) Proprietor: **NIO (Anhui) Holding Co., Ltd.
Hefei City, Anhui Province 23060 (CN)**

(72) Inventor: **FU, Qiang
Anting, Jiading, Shanghai (CN)**

(74) Representative: **Vossius & Partner
Patentanwälte Rechtsanwälte mbB
Siebertstrasse 3
81675 München (DE)**

(56) References cited:
| | |
|---|---|
| CN-A- 104 578 297 | CN-A- 104 578 297 |
| CN-A- 104 660 436 | CN-A- 104 869 003 |
| CN-A- 104 993 554 | CN-A- 107 864 054 |
| US-A1- 2011 298 417 | US-A1- 2013 141 040 |

## Description

## Technical Field

The invention relates to the field of powering up, and more particularly to a service support system for a power-up device, a service capability intelligent adjustment system, a service support method for a power-up device, a service capability intelligent adjustment method in the service capability intelligent adjustment system, and a computer device.

## Background Art

Historically, when an alarm occurs on a power-up device, the O & M personnel generally mark the power-up device as unavailable after it is discovered, and then shut it down to stop providing services. However, when the power-up device fails and generates an alarm, the power-up device is not completely unable to provide services, but it is likely to provide non-full-load services or a subset of services. Especially during a service demand peak, if the state of these power-up devices is marked as unavailable, it will cause a great waste of resources.

US 2013/0141040 A1 relates to an electric vehicle charging system. The system encompasses a load center having one or more electrical loads coupled thereto, electric vehicle supply equipment (EVSE) to charge an electric vehicle (EV), and a monitoring and limiting device (MLD) to monitor power or current usage of at least the one or more loads coupled to the load center, and adjust a charging level setting of the EVSE based upon the level of the usage. MLD apparatus and methods of charging a vehicle with electric vehicle supply equipment (EVSE) are provided.

US 2011/0298417 A1 relates to an apparatus and method for identifying a presence of a short circuit in a battery pack. A fault-detection apparatus for a charging system that rapidly charges a collection of interconnected lithium ion battery cells, the safety system includes a data-acquisition system for receiving a set of data parameters from the collection while the charging system is actively charging the collection, a monitoring system evaluating the set of data parameters to identify a set of anomalous conditions, and a controller comparing the set of anomalous conditions against a set of predetermined profiles indicative of an internal short in one or more cells of the collection, the controller establishing an internal-short state for the collection when the comparing has a predetermined relationship to the set of predetermined profiles.

## Summary of the Invention

The invention is defined in the appended claims. Aspects, embodiments and examples disclosed herein which do not fall within the scope of the appended claims do not form part of the invention and are merely provided for illustrative purposes.

The invention is implemented to overcome the above-mentioned shortcomings or other shortcomings, and the adopted technical solutions are as follows.

An embodiment of the invention provides a service support system for a power-up device, the system comprising: a receiving unit configured to receive real-time index data of the power-up device that is collected at a certain frequency from the power-up device; a storage unit configured to store the real-time index data received by the receiving unit; a determination unit configured to determine, based on the real-time index data stored in the storage unit, whether a service level intelligent adjustment condition is reached; and a service level adjustment unit configured to intelligently adjust the service level of the power-up device based on a determination result of the determination unit.

Further, in the service support system according to an embodiment of the invention, the determination unit is configured to compare the real-time index data stored in the storage unit individually with a preset safety threshold, and determine, when a certain real-time index data meets a preset service level adjustment trigger condition, whether the data stored in the storage unit and starting from the real-time index data within m consecutive data collection cycles meets a preset service level recovery condition, and if the service level recovery condition is not met, determine whether the data within the first n data collection cycles of the m data collection cycles meets a preset service level degradation condition, where m and n both are positive integers and $m \geq n$; and the service level adjustment unit is configured to recover the service level of the power-up device when the determination unit determines that the service level recovery condition is met, degrade the service level of the power-up device when the determination unit determines that the service level recovery condition is not met but the service level degradation condition is met, and maintain the service level of the power-up device as it is when the determination unit determines that neither the service level recovery condition nor the service level degradation condition is met.

Further, in the service support system according to an embodiment of the invention, the service level adjustment unit is configured to maintain, when the determination unit determines that the service level recovery condition is met and the current service level of the power-up device is the highest service level that cannot be further upgraded, the service level of the power-up device as it is.

Further, in the service support system according to an embodiment of the invention, the service level adjustment unit is configured to shut down, when the determination unit determines that the service level degradation condition is met and the current service level of the power-up device is the lowest service level that cannot be further degraded, the service of the power-up device.

Further, in the service support system according to an embodiment of the invention, the system further comprises: a display unit configured to display the service level of the power-up device that is obtained after adjustment by the service level adjustment unit.

Further, in the service support system according to an embodiment of the invention, the system further comprises: a service level notification unit configured to notify the power-up device of the service level obtained after adjustment by the service level adjustment unit.

Further, in the service support system according to an embodiment of the invention, the system further comprises: a data collection instruction generation unit configured to generate an instruction for collecting the real-time index data of the power-up device; and a sending unit configured to send the generated instruction to the power-up device.

An embodiment of the invention provides a system for intelligent adjustment of service capabilities, comprising: at least one power-up device, each of which comprising: a data collection unit configured to collect its own real-time index data at a certain frequency; and a sending unit configured to send the real-time index data; and the service support system according to an embodiment of the invention, which interacts with the at least one power-up device in a wired or wireless manner.

An embodiment of the invention provides a service support method for a power-up device, the method comprising: a receiving step for receiving real-time index data of the power-up device that is collected at a certain frequency from the power-up device; a storage step for storing the real-time index data received in the receiving step; a determination step for determining, based on the stored real-time index data, whether a service level intelligent adjustment condition is reached; and a service level adjustment step for intelligently adjusting the service level of the power-up device based on a determination result of the determination step.

Further, in the service support method according to an embodiment of the invention, in the determination step, the stored real-time index data is compared individually with a preset safety threshold, and when a certain real-time index data meets a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition, where m and n both are positive integers and $m \geq n$; and in the service level adjustment step, the service level of the power-up device is recovered when it is determined in the determination step that the service level recovery condition is met, the service level of the power-up device is degraded when it is determined in the determination step that the service level recovery condition is not met but the service level degradation condition is met, and the service level of the power-up device is maintained as it is when it is determined in the determination step that neither the service level recovery condition nor the service level degradation condition is met.

Further, in the service support method according to an embodiment of the invention, in the service level adjustment step, when it is determined in the determination step that the service level recovery condition is met and the current service level of the power-up device is the highest service level that cannot be further upgraded, the service level of the power-up device is maintained as it is.

Further, in the service support method according to an embodiment of the invention, in the service level adjustment step, when it is determined in the determination step that the service level degradation condition is met and the current service level of the power-up device is the lowest service level that cannot be further degraded, the service of the power-up device is shut down.

Further, in the service support method according to an embodiment of the invention, the method further comprises: a display step for displaying the service level of the power-up device that is obtained after adjustment in the service level adjustment step.

Further, in the service support method according to an embodiment of the invention, the method further comprises: a service level notification step for notifying the power-up device of the service level obtained after adjustment in the service level adjustment step.

Further, in the service support method according to an embodiment of the invention, the method further comprises: a data collection instruction generation step for generating an instruction for collecting the real-time index data of the power-up device; and a sending step for sending the generated instruction to the power-up device.

An embodiment of the invention provides a method for intelligent adjustment of service capabilities in a service capability intelligent adjustment system. The system comprises at least one power-up device and a service support system for the power-up device. The method comprises: a data collection step for collecting, by each of the at least one power-up device, its own real-time index data at a certain frequency; a sending step for sending, by each of the at least one power-up device, the real-time index data to the service support system; a receiving step for receiving, by the service support system, the real-time index data from each of the at least one power-up device; a storage step for storing for each of the at least one power-up device, by the service support system, the real-time index data received in the receiving step; a determination step for determining for each of the at least one power-up device, by the service support system based on the stored corresponding real-time index data, whether a service level adjustment condition is reached; and a service level adjustment step for intelligently adjusting for each of the at least one power-up device, by the service support system based on a determination result of the determination step, the service level of the power-up device.

Further, in the method for intelligent adjustment of service capabilities according to an embodiment of the invention, in the determination step, for each of the at least one power-up device, the stored real-time index data is compared individually with a preset safety threshold, and when a certain real-time index data meets a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition, where m and n both are positive integers and m $\geq$ n; and in the service level adjustment step, the service level of the power-up device is recovered when it is determined in the determination step that the service level recovery condition is met, the service level of the power-up device is degraded when it is determined in the determination step that the service level recovery condition is not met but the service level degradation condition is met, and the service level of the power-up device is maintained as it is when it is determined in the determination step that neither the service level recovery condition nor the service level degradation condition is met.

Further, in the service capability intelligent adjustment method according to an embodiment of the invention, in the service level adjustment step, when it is determined in the determination step that the service level recovery condition is met and the current service level of the power-up device is the highest service level that cannot be further upgraded, the service level of the power-up device is maintained as it is.

Further, in the method for intelligent adjustment of service capabilities according to an embodiment of the invention, in the service level adjustment step, when it is determined in the determination step that the service level degradation condition is met and the current service level of the power-up device is the lowest service level that cannot be further degraded, the service of the power-up device is shut down.

Further, in the method for intelligent adjustment of service capabilities according to an embodiment of the invention, the method further comprises: a display step for displaying for each of the at least one power-up device, by the service support system, the service level obtained after adjustment in the service level adjustment step.

Further, in the method for intelligent adjustment of service capabilities according to an embodiment of the invention, the method further comprises: a service level notification step for notifying, by the service support system, each of the at least one power-up device of the service level obtained after adjustment in the service level adjustment step.

Further, in the method for intelligent adjustment of service capabilities according to an embodiment of the invention, the method further comprises: a data collection instruction generation step for generating, by the service support system, an instruction for collecting the real-time index data of the power-up device; and a sending step for sending, by the service support system, the generated instruction to the power-up device.

An embodiment of the invention provides a computer device, comprising: a first memory configured to store therein real-time index data of a power-up device that is collected at a certain frequency; a second memory configured to store therein a program related to service support for the power-up device; and a processor configured to execute the program stored in the second memory so as to perform the following steps: a determination step for determining, based on the real-time index data stored in the first memory, whether a service level adjustment condition is reached; and a service level adjustment step for intelligently adjusting the service level of the power-up device based on a determination result of the determination step.

Further, in the computer device according to an embodiment of the invention, in the determination step, the stored real-time index data is compared individually with a preset safety threshold, and when a certain real-time index data meets a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition, where m and n both are positive integers and m $\geq$ n; and in the service level adjustment step, the service level of the power-up device is recovered when it is determined in the determination step that the service level recovery condition is met, the service level of the power-up device is degraded when it is determined in the determination step that the service level recovery condition is not met but the service level degradation condition is met, and the service level of the power-up device is maintained as it is when it is determined in the determination step that neither the service level recovery condition nor the service level degradation condition is met.

Further, in the computer device according to an embodiment of the invention, in the service level adjustment step, when it is determined in the determination step that the service level recovery condition is met and the current service level of the power-up device is the highest service level that cannot be further upgraded, the service level of the power-up device is maintained as it is.

Further, in the computer device according to an embodiment of the invention, in the service level adjustment step, when it is determined in the determination step that the service level degradation condition is met and the current service level of the power-up device is the lowest service level that cannot be further degraded, the service of the power-up device is shut down.

Further, in the computer device according to an embodiment of the invention, the processor further executes the program to perform the following steps: a data collection instruction generation step for generating an instruction for collecting the real-time index data of the power-up device; and a sending step for sending the generated instruction to the power-up device.

Compared with the prior art, the beneficial effects of the invention are as follows:

1) According to the invention, it is possible to dynamically provide a service capability according to the current state of a power-up device while taking into account the availability and service efficiency of the power-up device.

2) According to the invention, it is possible to perform step-by-step degrading of the power-up device instead of directly shutting down the service, thereby alleviating service pressure during a service peak.

3) According to the invention, the service level of the power-up device can be automatically degraded and recovered without manual intervention.

**Brief Description of the Drawings**

FIG. 1 is a block diagram of a system for intelligent adjustment of service capabilities according to an embodiment of the invention;

FIG. 2 is a specific structural block diagram of a service support system according to an embodiment of the invention;

FIG. 3 is a schematic flowchart of a method for intelligent adjustment of service capabilities according to an embodiment of the invention;

FIG. 4 is a detailed flowchart of steps SO1 to S04 in FIG. 3 according to an embodiment of the invention; and

FIG. 5 is a block diagram of a computer device for implementing a service support system according to an embodiment of the invention.

**Detailed Description of Embodiments**

A service support system for a power-up device, a service capability intelligent adjustment system, a service support method for a power-up device, a service capability intelligent adjustment method in the service capability intelligent adjustment system, and a computer device according to the invention will be described in further detail below in combination with the accompanying drawings. It should be noted that the following detailed description of embodiments are exemplary rather than limiting, and are intended to provide a basic understanding of the invention, and are not intended to confirm key or decisive elements of the invention or limit the scope of protection.

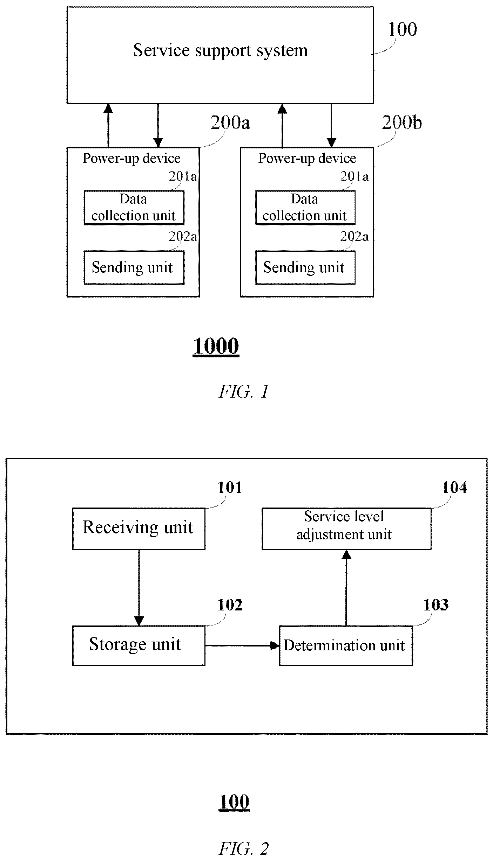

FIG. 1 is a block diagram of a system for intelligent adjustment of service capabilities according to an embodiment of the invention. The system 1000 for intelligent adjustment of service capabilities shown in FIG. 1 is taken as an example for illustration. The system 1000 for intelligent adjustment of service capabilities is a system for intelligent adjustment of the service capabilities (i.e., service levels) of the power-up device.

It should be noted that the "power-up device" referred to herein includes but is not limited to a battery swap station, a charging station, a mobile battery swap vehicle, a mobile charging vehicle, a charging pile, etc.

In addition, it should be noted that the "intelligent adjustment of service capabilities (i.e., service level)" mentioned herein includes service level degradation, service level recovery, service level maintenance, etc. The "service level degradation" means that, for example, when monitored real-time index data of the power-up device exceeds or falls below a threshold, or the power-up device generates an alarm or even fails, the service capability (i.e., service level) of the power-up device is strategically reduced to ensure that the power-up device can still provide part of the service instead of directly shutting down the service. The "service level recovery" means that, for example, the service capability (i.e., service level) of the power-up device is strategically recovered until the service capability is completely recovered (i.e., recovered to the highest service level that cannot be further upgraded) when monitored real-time index data of the power-up device shows that the state of the power-up device has improved, or the alarm of the power-up device is gradually eliminated, or the failure of the power-up device is gradually resolved.

In one example, the service of power-up device can be graded as follows. Assuming that the power-up device can provide up to x batteries with power-up services, service levels of the power-up device can be divided into:

◎ L0 level service: providing power-up services for x batteries;

◎ L1 level service: subtracting power-up services for y batteries, that is, providing power-up services for x-y batteries;

◎ L2 level service: further subtracting power-up services for 2y batteries, that is, providing power-up services for x-3y batteries;

... (step by step, power-up services for 2y (q-1) batteries are reduced for each level than the previous level)

◎ Lq level service: further reducing power-up services for 2y (q-1) batteries on the basis of Lq-1 level service, that is, providing power-up services for x-q (q-1) y batteries (q > 1), and if x-q (q-1) y < 0, then providing power-up services for x-(q-1) (q-2) y batteries.

L0 level is the highest service level mentioned above that cannot be further upgraded, while Lq level is the lowest service level that cannot be further degraded.

In the case where the current service level of the power-up device is at the L0 level service, the strategy for degrading the service level of the power-up device is divided into an initial service degradation strategy and a secondary service degradation strategy. In the initial service degradation strategy, the service level of the power-up device is degraded from the L0 level service to the L1 level service. In the secondary service degradation strategy, the service level is degraded step by step from the L1 level service to the Lq level service. If further degradation is required at this time, the service of the power-up device is shut down to stop the power-up services for all batteries.

Alternatively, in the case where the current service level of the power-up device is at the Lq level service, the strategy for recovering the service level of the power-up device is divided into an initial service recovery strategy and a secondary service recovery strategy. In the initial service recovery strategy, the service level of the power-up device is recovered from the Lq level service to the Lq-1 level service. In the secondary service recovery strategy, the service level is recovered step by step from the Lq-1 level service until the L0 level service. If further recovery is required at this time, it can only be maintained at the current L0 level service in view of the maximum number of batteries served by the power-up device.

As shown in FIG. 1, the service capability intelligent adjustment system 1000 comprises a service support system 100 and power-up devices 200a and 200b. Although only two power-up devices are depicted in FIG. 1, it should be appreciated that the number of power-up devices is not limited to two, but may be one or more than three.

In FIG. 1, the power-up devices 200a and 200b have the same structure. The power-up device 200a is taken as an example for illustration. The power-up device 200a comprises a data collection unit 201a and a sending unit 202a.

The data collection unit 201a is configured to collect real-time index data of the power-up device at a certain frequency. It should be noted that the above-mentioned frequency for collecting data can be set by the power-up device itself, or can be preset by the service support system for each power-up device, and the above-mentioned frequency for collecting data can vary with type of the different real-time index data. In addition, it should be noted that the "real-time index data" referred to herein includes but is not limited to the temperature of a battery area of the power-up device, the humidity of the battery area of the power-up device, the power of the power-up device, etc. The monitored real-time index data can be set according to the functional attributes of the power-up device itself and a service target, and a safety threshold for the real-time index data can be preset. In one example, it is assumed that the temperature value k of the battery area of the power-up device is selected as the real-time index data to be monitored, the collection frequency is 1 second/time and the safety threshold is 35 degrees Celsius.

The sending unit 202a is configured to send the real-time index data collected by the data collection unit 202a to the service support system 100.

The service support system 100 interacts with the power-up devices 200a and 200b in a wired or wireless manner. It should be noted that the "wired manner" mentioned herein includes but is not limited to I2C, SPI, PS/2, Universal Serial Bus (USB), etc. The "wireless manner" mentioned herein includes but is not limited LTE, WCDMA, Bluetooth, RF, IRDA, etc. The specific structure of the service support system 100 is illustrated in FIG. 2.

As shown in FIG. 2, the service support system 100 comprises a receiving unit 101, a storage unit 102, a determination unit 103, and a service level adjustment unit 104.

Since the service support system 100 adjusts the service level of each power-up device independently, the power-up device 200a in FIG. 1 is taken as an example for illustration.

The receiving unit 101 is configured to receive real-time index data of the power-up device 200a that is collected at a certain frequency from the power-up device 200a.

The storage unit 102 is configured to store the real-time index data of the power-up device 200a received by the receiving unit 101. The storage of the real-time index data can be in the order of collection for subsequent invocation.

The determination unit 103 is configured to determine, based on the real-time index data of the power-up device 200a stored in the storage unit 102, whether a service level intelligent adjustment condition is reached. The "service level intelligent adjustment condition" referred to herein includes but is not limited to a service level recovery condition, a service level degradation condition, etc.

Preferably, the determination unit 103 may compare the real-time index data stored in the storage unit 102 individually with a preset safety threshold, and determine, when a certain real-time index data meets a preset service level adjustment trigger condition, whether the data stored in the storage unit 102 and starting from the real-time index data within m consecutive data collection cycles meets a preset service level recovery condition, and if the service level recovery condition is not met, determine whether the data within the first n data collection cycles of the m data collection cycles meets a preset service level degradation condition, where m and n both are positive integers and $m \geq n$.

It should be noted that the "service level adjustment trigger condition" mentioned herein may be preset as, for example, the real-time index data (for example, temperature value) is greater than a preset safety threshold (for example, temperature safety threshold) or the real-time index data (for example, power value) is less than a preset safety threshold (for example, power safety threshold), depending on the different types of the real-time index data. In addition, the "service level recovery condition" mentioned herein may also be preset as, for example, the total number of times that the real-time index data (for example, temperature value) does not exceed a safety threshold (for example, temperature safety threshold) within m consecutive data collection cycles reaches a preset probability threshold value $\beta$ or the total number of times that the real-time index data (for example, power value) exceeds a safety threshold (for example, power safety threshold) within m consecutive data collection cycles reaches a preset probability threshold value $\beta$, depending on the different types of the real-time index data. In addition, the "service level degradation condition" mentioned herein may also be preset as, for example, the following conditions (a) (b) (c) and (d) depending on the different types of the real-time index data:

(a) the probability value of the normal distribution of data k1, k2, k3 ... collected within n consecutive data collection cycles is greater than a preset probability value, which is expressed by the following formula:

$$f(x) = \frac{1}{\sqrt{2\pi}\sigma} \exp\left(-\frac{(x-\mu)^2}{2\sigma^2}\right) > \alpha$$

where $\mu$ is the average value of the data k1, k2, k3 ... collected within the n consecutive data collection cycles, $\sigma$ is the standard deviation of the data k1, k2, k3 ... collected within the n consecutive data collection cycles, and $\alpha$ is a preset probability value;
(b) the average value avg (k1, k2, k3 ...) of the data k1, k2, k3 ... collected within the n consecutive data collection cycles exceeds a safety threshold;
(c) the maximum value max (k1, k2, k3 ...) of the data k1, k2, k3 ... collected within the n consecutive data collection cycles exceeds the safety threshold;
(d) the minimum value min (k1, k2, k3) of the data k1, k2, k3 ... collected within the n consecutive data collection cycles exceeds the safety threshold.

In the above example where the temperature value k of a battery area of a power-up device is used as real-time index data, it is assumed that m = 1800, n = 30, $\mu$ = 35, $\sigma$ = 3, $\alpha$ = 0.5, and $\beta$ = 98%. The determination unit 103 compares the temperature values k1, k2, k3 ... of battery areas of the power-up device stored in the storage unit 102 individually with 35 degrees Celsius, and when the temperature value (for example, ki) of a certain battery area is greater than 35 degrees Celsius (i.e., meets the preset service level adjustment trigger condition), determines for the temperature values ki + 1, ki + 2, ki + 3 ..., stored in the storage unit 102 and starting from the temperature value ki of the battery area within 1800 consecutive data collection cycles whether such a service level recovery condition is met that the number of times not exceeding 35 degrees Celsius accounts for more than 98% of the total number of times, and in the case where the service level recovery condition is not met, determines whether the temperature values collected within the first 30 data collection cycles of the 1800 data collection cycles meets one of the following service level degradation conditions: (I) the numerical average value avg (ki + 1, ki + 2, ki + 3 ...) of temperature values ki + 1, ki + 2, ki + 3 ...... collected within the 30 consecutive data collection cycles exceeds the safety threshold; and (II) the probability value of the normal distribution of temperature values ki + 1, ki + 2, ki + 3 ... collected within 30 consecutive data collection cycles is greater than 0.5.

The service level adjustment unit 104 is configured to intelligently adjust the service level of the power-up device 200a based on a determination result of the determination unit 103.

Preferably, the service level adjustment unit 104 recovers the service level of the power-up device 200a when the determination unit 103 determines that the above service level recovery condition is met, degrades the service level of the power-up device when the determination unit 103 determines that the above service level degradation condition is met, and maintains the service level of the power-up device 200a as it is when the determination unit 103 determines that neither the above service level recovery condition nor the above service level degradation condition is met. In particular, when the determination unit 103 determines that the above service level recovery condition is met, and the current service level of the power-up device 200a is the highest service level that cannot be further upgraded, the service level adjustment unit 104 maintains the service level of the power-up device 200a as it is. Alternatively, when the determination unit 103 determines that the above service level degradation condition is met, and the current service level of the power-up device 200a is the lowest service level that cannot be further degraded, the service of the power-up device 200a is shut down.

In the above example where the temperature value k of the battery area of the power-up device is used as the real-time index data, assuming that the power-up device can provide power-up services for up to 9 batteries and assuming y = 1, the service levels of the power-up device can be divided into:

◎ L0 level service: providing power-up services for 9 batteries;
◎ L1 level service: providing power-up services for 8 batteries;
◎ L2 level service: providing power-up services for 6 batteries;
◎ L3 level service: providing power-up services for 2 batteries.

L0 level is the highest service level mentioned above that cannot be further upgraded, while L3 level is the lowest service level that cannot be further degraded.

In the case where the current service level of the power-up device is at the L0 level service, the strategy for degrading the service level of the power-up device is divided into an initial service degradation strategy and a secondary service degradation strategy. In the initial service degradation strategy, the service level of the power-up device is degraded from the L0 level service to the L1 level service. In the secondary service degradation strategy, the service level of the power-up device is degraded step by step to the L2 level service, then to the L3 level service. If further degradation is required at this time, the power-up device is shut down to stop its services.

Alternatively, in the case where the current service level of the power-up device is at the L3 level service, the strategy for recovering the service level of the power-up device is divided into an initial service recovery strategy and a secondary service recovery strategy. In the initial service recovery strategy, the service level of the power-up device is recovered from the L3 level service to the L2 level service. In the secondary service recovery strategy, the service level is recovered step by step from the L2 level service to the L1 level service, then to the L0 level service. If further recovery is required at this time, it can only be maintained at the current L0 level service in view of the maximum number of batteries served by the power-up device.

In the above example, when the determination unit 103 determines that the temperature values ki + 1, ki + 2, ki + 3 ... starting from the temperature value ki of the battery area within 1800 consecutive data collection cycles meet the condition that the number of times not exceeding 35 degrees Celsius accounts for more than 98% of the total number of times, the service level adjustment unit 104 recovers the service level of the power-up device 200a. If the service level of the power-up device 200a is already at the L0 level service at this time, then the power-up device 200a is maintained at the L0 level service. Alternatively, when the determination unit 103 determines that the above proportion does not exceed 98% but the temperature values collected within the first 30 data collection cycles of the 1800 data collection cycles meet one of the following service level degradation conditions: (I) the numerical average value avg (ki + 1, ki + 2, ki + 3 ...) of the temperature values ki + 1, ki + 2, ki + 3 ... collected within 30 consecutive data collection cycles exceeds a safety threshold; (II) the probability value of the normal distribution of the temperature values ki + 1, ki + 2, ki + 3... collected within 30 consecutive data collection cycles is greater than 0.5, the service level adjustment unit 104 degrades the service level of the power-up device 200a. If the service level of the power-up device 200a is already at the L3 level service at this time, the power-up device 200a is shut down to stop the power-up service. Alternatively, when the determination unit 103 determines that the above proportion does not exceed 98% but the temperature values collected within the first 30 data collection cycles of the 1800 data collection cycles do not meet any of the above conditions (I) and (II), the service level adjustment unit 104 maintains the service level of the power-up device 200a as it is.

Preferably, the service support system 100 may further comprise a display unit (not shown) configured to display the service level obtained after adjustment by the service level adjustment unit 104 of the power-up device.

In addition, preferably, the service support system 100 may further comprise a service level notification unit (not shown) configured to notify the power-up device of the service level obtained after adjustment by the service level adjustment unit 104.

Furthermore, in some embodiments, the power-up devices 200a and 200b may actively collect their own real-time index data and report it to the service support system 100. However, in some other embodiments, the service support system 100 may also instruct the power-up devices 200a and 200b to collect their own real-time index data and report it. In this case, the service support system 100 preferably comprises: a data collection instruction generation unit (not shown) configured to generate instructions for collecting real-time index data of the power-up device; and a sending unit (not shown) configured to send the generated instruction to the power-up device.

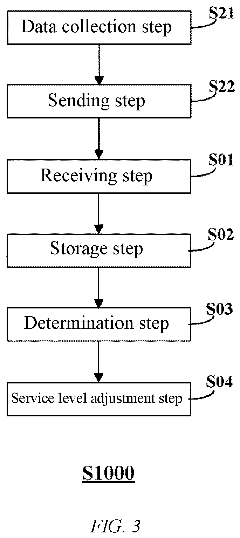

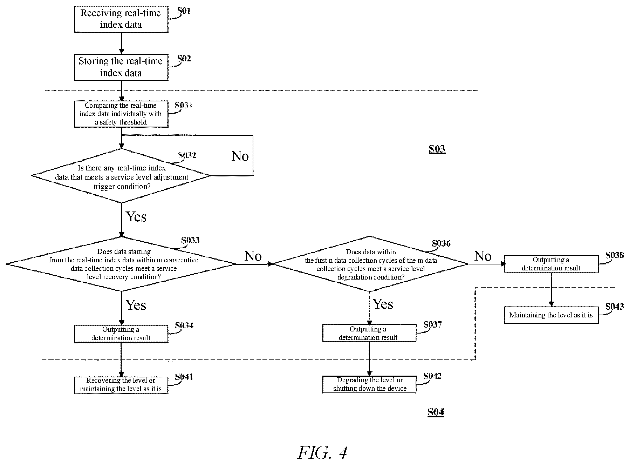

Next, the method for intelligent adjustment of service capabilities in the service capability intelligent adjustment system 1000 shown in FIG. 1 will be described with reference to FIGs. 3 and 4. FIG. 3 is a schematic flowchart of a method for intelligent adjustment of service capabilities according to an embodiment of the invention; and FIG. 4 is a detailed flowchart of steps SO1 to S04 in FIG. 3 according to an embodiment of the invention.

As shown in FIG. 3, the method for intelligent adjustment of service capabilities comprises a data collection step (S21), a sending step (S22), a receiving step (SO1), a storage step (S02), a determination step (S03), and a service level adjustment step (S04).

In the data collection step (S21), each of the at least one power-up device (for example, each of the power-up devices 200a and 200b shown in FIG. 1) collects its own real-time index data at a certain frequency. It should be noted that the above-mentioned frequency for collecting data can be set by the power-up device itself, or can be preset by the service support system for each power-up device, and the above-mentioned frequency for collecting data can vary with the type of the different real-time index data. In addition, the description about "real-time index data" is the same as the foregoing, which will not be described in further detail. In one example, it is assumed that the temperature value k of the battery area of the power-up device is selected as the real-time index data to be monitored, the collection frequency is 1 second/time and the safety threshold is 35 degrees Celsius.

In the sending step (S22), each of the at least one power-up device (for example, each of the power-up devices 200a and 200b shown in FIG. 1) sends the above real-time index data to the service support system 100.

In the receiving step (S01), the above real-time index data from each of the at least one power-up device (for example, each of the power-up devices 200a and 200b shown in FIG. 1) is received by the service support system 100.

In the storage step (S02), the service support system 100 stores, for each of the at least one power-up device (for example, each of the power-up devices 200a and 200b shown in FIG. 1), the above real-time index data received in the receiving step (S01). The storage of the real-time index data can be in the order of collection for subsequent invocation.

In the determination step (S03), the service support system 100 determines for each of the at least one power-up device (for example, each of the power-up devices 200a and 200b shown in FIG. 1), based on the stored corresponding real-time index data, whether a service level intelligent adjustment condition is reached. The description about "service level intelligent adjustment condition" is the same as the foregoing, which will not be described in further detail.

Since the service capability intelligent adjustment system 1000 adjusts the service level of each power-up device independently, the power-up device 200a **in** FIG. 1 is taken as an example for illustration. Other power-up devices are similar.

Preferably, in the determination step (S03), the stored real-time index data can be compared individually with a preset safety threshold, and when a certain real-time index data meets a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition, where m and n both are positive integers and m ≥ n.

The description about the "service level adjustment trigger condition", "service level recovery condition", and "service level degradation condition" are the same as the foregoing, which will not be described in further detail.

In the above example where the temperature value k of a battery area of a power-up device is used as real-time index data, it is assumed that m = 1800, n = 30, μ = 35, σ = 3, α = 0.5, and β = 98%. In the determination step (S03), the stored temperature values k1, k2, k3 ... of battery areas of the power-up device are compared individually with 35 degrees Celsius, and when the temperature value (for example, ki) of a certain battery area is greater than 35 degrees Celsius (i.e., meets the preset service level adjustment trigger condition), it is determined for the stored temperature values ki + 1, ki + 2, ki + 3 ... starting from the temperature value ki of the battery area within 1800 consecutive data collection cycles whether such a service level recovery condition is met that the number of times not exceeding 35 degrees Celsius accounts for more than 98% of the total number of times, and in the case where the service level recovery condition is not met, it is determined whether the temperature values collected within the first 30 data collection cycles of the 1800 data collection cycles meets one of the following service level degradation conditions: (I) the numerical average value avg (ki + 1, ki + 2, ki + 3 ...) of temperature values ki + 1, ki + 2, ki + 3 ...... collected within the 30 consecutive data collection cycles exceeds the safety threshold; and (II) the probability value of the normal distribution of temperature values ki + 1, ki + 2, ki + 3 ... collected within 30 consecutive data collection cycles is greater than 0.5.

In the service level adjustment step (S04), the service support system 100 intelligently adjusts for each of the at least one power-up device (for example, each of the power-up devices 200a and 200b shown in FIG. 1), based on the determination result of the determination step (S03), the service level of the power-up device.

Since the service capability intelligent adjustment system 1000 adjusts the service level of each power-up device independently, the power-up device 200a in FIG. 1 is taken as an example for illustration. Other power-up devices are similar.

Preferably, in the service level adjustment step (S04), the service level of the power-up device 200a is recovered when it is determined in the determination step (S03) that the above service level recovery condition is met, the service level of the power-up device 200a is degraded when it is determined in the determination step (S03) that the above service level recovery condition is not met but the above service level degradation condition is met, and the service level of the power-up device 200a is maintained as it is when it is determined in the determination step (S03) that neither the above service level recovery condition nor the above service level recovery condition is met. In particular, when it is determined in the determination step (S03) that the above service level recovery condition is met, and the current service level of the power-up device 200a is the highest service level that cannot be further upgraded, in the service level adjustment step (S04), the service level of the power-up device 200a is maintained as it is. Alternatively, when it is determined in the determination step (S03) that the above service level upgradation condition is not met but the above service level degradation condition is met, and the current service level of the power-up device 200a is the lowest service level that cannot be further degraded, in the service level adjustment step (S04), the service of the power-up device 200a is shut down.

In the above example where the temperature value k of the battery area of the power-up device is used as the real-time index data, assuming that the power-up device can provide power-up services for up to 9 batteries and assuming y = 1, the service level of the power-up device can be divided into:

◎ L0 level service: providing power-up services for 9 batteries;

◎ L1 level service: providing power-up services for 8 batteries;

◎ L2 level service: providing power-up services for 6 batteries;

◎ L3 level service: providing power-up services for 2 batteries.

L0 level is the highest service level mentioned above that cannot be further upgraded, while L3 level is the lowest service level that cannot be further degraded.

In the case where the current service level of the power-up device is at the L0 level service, the strategy for degrading the service level of the power-up device is divided into an initial service degradation strategy and a secondary service degradation strategy. In the initial service degradation strategy, the service level of the power-up device is degraded from the L0 level service to the L1 level service. In the secondary service degradation strategy, the service level of the power-up device is degraded step by step to the L2 level service, then to the L3 level service. If further degradation is required at this time, the power-up device is shut down to stop its services.

Alternatively, in the case where the current service level of the power-up device is at the L3 level service, the strategy for recovering the service level of the power-up device is divided into an initial service recovery strategy and a secondary service recovery strategy. In the initial service recovery strategy, the service level of the power-up device is recovered from the L3 level service to the L2 level service. In the secondary service recovery strategy, the service level is recovered step by step from the L2 level service to the L1 level service, then to the L0 level service. If further recovery is required at this time, it can only be maintained at the current L0 level service in view of the maximum number of batteries served by the power-up device.

In the above example, when it is determined in the determination step (S03) that the temperature values $k_i + 1, k_i + 2, k_i + 3$ ... starting from the temperature value $k_i$ of the battery area within 1800 consecutive data collection cycles meet the condition that the number of times not exceeding 35 degrees Celsius accounts for more than 98% of the total number of times, in the service level adjustment step (S04), the service level of the power-up device 200a is recovered. If the service level of the power-up device 200a is already at the L0 level service at this time, then the power-up device 200a is maintained at the L0 level service. Alternatively, when it is determined in the determination step (S03) that the above proportion does not exceed 98% but the temperature values collected within the first 30 data collection cycles of the 1800 data collection cycles meet one of the following service level degradation conditions: (I) the numerical average value avg ($k_i + 1, k_i + 2, k_i + 3$ ...) of the temperature values $k_i + 1, k_i + 2, k_i + 3$ ... collected within 30 consecutive data collection cycles exceeds a safety threshold; (II) the probability value of the normal distribution of the temperature values $k_i + 1, k_i + 2, k_i + 3$... collected within 30 consecutive data collection cycles is greater than 0.5, in the service level adjustment step (S04), the service level of the power-up device 200a is degraded. If the service level of the power-up device 200a is already at the L3 level service at this time, the power-up device 200a is shut down to stop the power-up service. Alternatively, when it is determined in the determination step (S03) that the above proportion does not exceed 98% but the temperature values collected within the first 30 data collection cycles of the 1800 data collection cycles do not meet any of the above conditions (I) and (II), in the service level adjustment step (S04), the service level of the power-up device 200a is maintained as it is.

Preferably, the method S1000 for intelligent adjustment of service capabilities may further comprise a display step for displaying, by the service support system 100, the service level of the power-up device that is obtained after adjustment in the service level adjustment step (S04).

In addition, preferably, the method S1000 for intelligent adjustment of service capabilities may further comprise a service level notification unit for notifying, by the service support system 100, the power-up device of the service level of the power-up device that is obtained after adjustment in the service level adjustment step (S04).

Furthermore, in some embodiments, the power-up devices 200a and 200b may actively collect their own real-time index data and report it to the service support system 100. However, in some other embodiments, the service support system 100 may also instruct the power-up devices 200a and 200b to collect their own real-time index data and report it. In this case, the method S1000 for intelligent adjustment of service capabilities preferably comprises: a data collection instruction generation step for generating, by the service support system 100, an instruction for collecting the real-time index data of the power-up device; and a sending step for sending, by the service support system 100, the generated instruction to the power-up device.

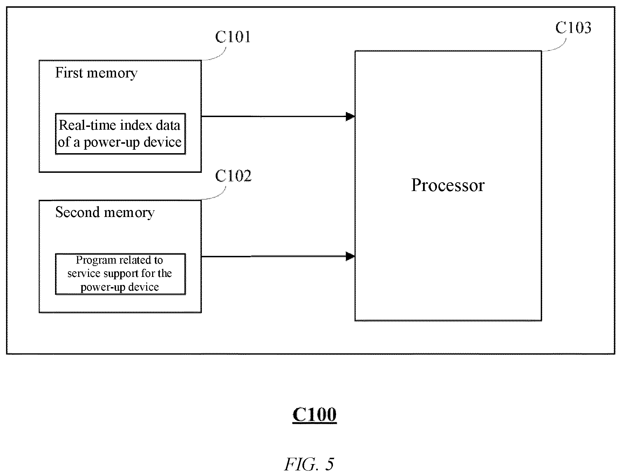

In the service support system 100 for a power-up device shown in FIGs. 1 and 2, the receiving unit 101 may be implemented by a cable or an antenna, which depends on the connection manner (wired or wireless manner) between the service support system 100 and various power-up devices, while the storage unit 102, the determination unit 103, and the service level adjustment unit 104 may be implemented by a computer device. A block diagram of such a computer device is shown in FIG. 5.

As shown in FIG. 5, the computer device C100 comprises a first memory C101, a second memory C102, and a processor C103.

The first memory C101 stores the real-time index data of the power-up device that is collected at a certain frequency as described above.

The second memory C102 stores a program related to service support for the power-up device.

The processor C103 reads the real-time index data from the first memory C101 and reads the program from the second memory C102, and then executes the program to perform the following steps: a determination step for determining, based on the real-time index data stored in the first memory C101, whether a service level adjustment condition is reached; and a service level adjustment step for intelligently adjusting the service level of the power-up device based on a determination result of the determination step.

Preferably, in the determination step, the stored real-time index data is compared individually with a preset safety threshold, and when the comparison result between a certain real-time index data and the safety threshold can reach a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition.

Preferably, in the service level adjustment step, the service level of the power-up device is recovered when it is determined in the determination step that the service level recovery condition is met, the service level of the power-up device is degraded when it is determined in the determination step that the service level recovery condition is not met but the service level degradation condition is met, and the service level of the power-up device is maintained as it is when it is determined in the determination step that neither the service level recovery condition nor the service level degradation condition is met. In particular, in the service level adjustment step, when it is determined in the determination step that the service level recovery condition is met and the current service level of the power-up device is the highest service level that cannot be further upgraded, the service level of the power-up device is maintained as it is. Alternatively, in the service level adjustment step, when it is determined in the determination step that the service level degradation condition is met and the current service level of the power-up device is the lowest service level that cannot be further degraded, the service of the power-up device is shut down.

Furthermore, as mentioned above, in some embodiments, the power-up device may actively collect its own real-time index data and report it to the service support system. However, in some other embodiments, the service support system may also instruct the power-up device to collect its own real-time index data and report it. In this case, the processor C103 may also execute the program to perform the following steps: a data collection instruction generation step for generating an instruction for collecting the real-time index data of the power-up device; and a sending step for sending the generated instruction to the power-up device.

**Claims**

1. A service support system (100) for a power-up device (200a, 200b), **characterized by** comprising:

   a receiving unit (101) configured to receive real-time index data of the power-up device (200a, 200b) that is collected at a certain frequency from the power-up device (200a, 200b), wherein the real-time index data comprises temperature of a battery area of the power-up device and power of the power-up device;
   a storage unit (102) configured to store the real-time index data received by the receiving unit (101);
   a determination unit (103) configured to determine, based on the real-time index data stored in the storage unit (102), whether a service level intelligent adjustment condition is reached; and
   a service level adjustment unit (104) configured to intelligently adjust the service level of the power-up device (200a, 200b) based on a determination result of the determination unit (103), thereby adjusting a number of batteries served by the power-up device (200a, 200b).

2. The service support system according to claim 1, **characterized in that**

   the determination unit (103) is configured to compare the real-time index data stored in the storage unit (102) individually with a preset safety threshold, and determine, when a certain real-time index data meets a preset service level adjustment trigger condition, whether the data stored in the storage unit (102) and starting from the real-time index data within m consecutive data collection cycles meets a preset service level recovery condition, and if the service level recovery condition is not met, determine whether the data within the first a data collection cycles of the m data collection cycles meets a preset service level degradation condition, where m and n both are positive integers and m ≥ n; and

the service level adjustment unit (104) is configured to recover the service level of the power-up device (200a, 200b) when the determination unit (103) determines that the service level recovery condition is met, degrade the service level of the power-up device (200a, 200b) when the determination unit (103) determines that the service level recovery condition is not met but the service level degradation condition is met, and maintain the service level of the power-up device (200a, 200b) as it is when the determination unit (103) determines that neither the service level recovery condition nor the service level degradation condition is met.

3. The service support system according to claim 2, **characterized in that**
the service level adjustment unit (104) is configured to maintain, when the determination unit (103) determines that the service level recovery condition is met and the current service level of the power-up device (200a, 200b) is the highest service level that cannot be further upgraded, the service level of the power-up device (200a, 200b) as it is.

4. The service support system according to claim 2, **characterized in that**
the service level adjustment unit (104) is configured to shut down, when the determination unit (103) determines that the service level degradation condition is met and the current service level of the power-up device (200a, 200b) is the lowest service level that cannot be further degraded, the service of the power-up device (200a, 200b).

5. A service support method for a power-up device (200a, 200b), **characterized by** comprising:

a receiving step (S01) for receiving real-time index data of the power-up device (200a, 200b) that is collected at a certain frequency from the power-up device (200a, 200b), wherein the real-time index data comprises temperature of a battery area of the power-up device and power of the power-up device;
a storage step (S02) for storing the real-time index data received in the receiving step (S01);
a determination step (S03) for determining, based on the stored real-time index data, whether a service level intelligent adjustment condition is reached; and
a service level adjustment step (S04) for intelligently adjusting the service level of the power-up device (200a, 200b) based on a determination result of the determination step (S03), thereby adjusting a number of batteries served by the power-up device (200a, 200b).

6. The service support method according to claim 5, **characterized in that**

in the determination step (S03), the stored real-time index data is compared individually with a preset safety threshold, and when a certain real-time index data meets a preset service level adjustment trigger condition, it is determined whether the stored data starting from the real-time index data within m consecutive data collection cycles meets a preset service level recovery condition, and if the service level recovery condition is not met, it is determined whether the data within the first n data collection cycles of the m data collection cycles meets a preset service level degradation condition, where m and n both are positive integers and m ≥ n; and in the service level adjustment step (S04), the service level of the power-up device (200a, 200b) is recovered when it is determined in the determination step (S03) that the service level recovery condition is met, the service level of the power-up device (200a, 200b) is degraded when it is determined in the determination step (S03) that the service level recovery condition is not met but the service level degradation condition is met, and the service level of the power-up device (200a, 200b) is maintained as it is when it is determined in the determination step (S03) that neither the service level recovery condition nor the service level degradation condition is met.

7. The service support method according to claim 6, **characterized in that**
in the service level adjustment step (S04), when it is determined in the determination step (S03) that the service level recovery condition is met and the current service level of the power-up device (200a, 200b) is the highest service level that cannot be further upgraded, the service level of the power-up device (200a, 200b) is maintained as it is.

8. The service support method according to claim 6, **characterized in that**
in the service level adjustment step (S04), when it is determined in the determination step (S03) that the service level degradation condition is met and the current service level of the power-up device (200a, 200b) is the lowest service level that cannot be further degraded, the service of the power-up device (200a, 200b) is shut down.

**Patentansprüche**

1. Dienstunterstützungssystem (100) für eine Einschaltvorrichtung (200a, 200b), **dadurch gekenn-**

zeichnet, dass es Folgendes umfasst:

eine Empfangseinheit (101), die dazu ausgelegt ist, Echtzeit-Indexdaten der Einschaltvorrichtung (200a, 200b) zu empfangen, die mit einer bestimmten Frequenz von der Einschaltvorrichtung (200a, 200b) erfasst werden, wobei die Echtzeit-Indexdaten die Temperatur eines Batteriebereichs der Einschaltvorrichtung und die Leistung der Einschaltvorrichtung umfassen; eine Speichereinheit (102), die dazu ausgelegt ist, die durch die Empfangseinheit (101) empfangenen Echtzeit-Indexdaten zu speichern; eine Bestimmungseinheit (103), die dazu ausgelegt ist, basierend auf den in der Speichereinheit (102) gespeicherten Echtzeit-Indexdaten zu bestimmen, ob eine Bedingung für eine intelligente Dienstgüteanpassung erreicht ist; und eine Dienstgüteanpassungseinheit (104), die dazu ausgelegt ist, die Dienstgüte der Einschaltvorrichtung (200a, 200b) basierend auf einem Bestimmungsergebnis der Bestimmungseinheit (103) intelligent anzupassen, wodurch eine Anzahl von Batterien angepasst wird, die von der Einschaltvorrichtung (200a, 200b) bedient wird.

2. Dienstunterstützungssystem nach Anspruch 1, **dadurch gekennzeichnet, dass**

die Bestimmungseinheit (103) dazu ausgelegt ist, die in der Speichereinheit (102) gespeicherten Echtzeit-Indexdaten einzeln mit einem voreingestellten Sicherheitsschwellenwert zu vergleichen und, wenn bestimmte Echtzeit-Indexdaten eine voreingestellte Auslösebedingung für eine Dienstgüteanpassung erfüllen, zu bestimmen, ob die in der Dateneinheit (102) gespeicherten Daten ausgehend von den Echtzeit-Indexdaten innerhalb von m aufeinanderfolgenden Datenerfassungszyklen eine voreingestellte Dienstgütewiederherstellungsbedingung erfüllen, und, falls die Dienstgütewiederherstellungsbedingung nicht erfüllt ist, zu bestimmen, ob die Daten innerhalb der ersten a Datenerfassungszyklen der m Datenerfassungszyklen eine voreingestellte Dienstgüteherabsetzungsbedingung erfüllen, wobei sowohl m als auch n positive ganze Zahlen sind und m ≥ n; und die Dienstgüteanpassungseinheit (104) dazu ausgelegt ist, die Dienstgüte der Einschaltvorrichtung (200a, 200b) wiederherzustellen, wenn die Bestimmungseinheit (103) bestimmt, dass die Dienstgütewiederherstellungsbedingung erfüllt ist, die Dienstgüte der Einschaltvorrichtung (200a, 200b) herabzusetzen, wenn die Bestimmungseinheit (103) bestimmt, dass die Dienstgütewiederherstellungsbedingung nicht erfüllt ist, aber die Dienstgüteherabsetzungsbedingung erfüllt ist, und die Dienstgüte der Einschaltvorrichtung (200a, 200b) aufrechtzuerhalten, so wie sie ist, wenn die Bestimmungseinheit (103) bestimmt, dass weder die Dienstgütewiederherstellungsbedingung noch die Dienstgüteherabsetzungsbedingung erfüllt ist.

3. Dienstunterstützungssystem nach Anspruch 2, **dadurch gekennzeichnet, dass**
die Dienstgüteanpassungseinheit (104) dazu ausgelegt ist, die Dienstgüte der Einschaltvorrichtung (200a, 200b) aufrechtzuerhalten, so wie sie ist, wenn die Bestimmungseinheit (103) bestimmt, dass die Dienstgütewiederherstellungsbedingung erfüllt ist und die aktuelle Dienstgüte der Einschaltvorrichtung (200a, 200b) die höchste Dienstgüte ist, die nicht mehr weiter verbessert werden kann.

4. Dienstunterstützungssystem nach Anspruch 2, **dadurch gekennzeichnet, dass**
die Dienstgüteanpassungseinheit (104) dazu ausgelegt ist, den Dienst der Einschaltvorrichtung (200a, 200b) zu beenden, wenn die Bestimmungseinheit (103) bestimmt, dass die Dienstgüteherabsetzungsbedingung erfüllt ist und die aktuelle Dienstgüte der Einschaltvorrichtung (200a, 200b) die niedrigste Dienstgüte ist, die nicht mehr weiter herabgesetzt werden kann.

5. Dienstunterstützungsverfahren für eine Einschaltvorrichtung (200a, 200b), **dadurch gekennzeichnet, dass** es Folgendes umfasst:

einen Empfangsschritt (S01) zum Empfangen von Echtzeit-Indexdaten der Einschaltvorrichtung (200a, 200b), die mit einer bestimmten Frequenz von der Einschaltvorrichtung (200a, 200b) erfasst werden, wobei die Echtzeit-Indexdaten die Temperatur eines Batteriebereichs der Einschaltvorrichtung und die Leistung der Einschaltvorrichtung umfassen; einen Speicherschritt (S02) zum Speichern der in dem Empfangsschritt (S01) empfangenen Echtzeit-Indexdaten; einen Bestimmungsschritt (S03) zum Bestimmen basierend auf den gespeicherten Echtzeit-Indexdaten, ob eine Bedingung für eine intelligente Dienstgüteanpassung erreicht ist; und einen Dienstgüteanpassungsschritt (S04) zum intelligenten Anpassen der Dienstgüte der Einschaltvorrichtung (200a, 200b) basierend auf einem Bestimmungsergebnis des Bestimmungsschritts (S03), wodurch eine Anzahl von Batterien angepasst wird, die von der Einschaltvorrichtung (200a, 200b) bedient wird.

**6.** Dienstunterstützungsverfahren nach Anspruch 5, **dadurch gekennzeichnet, dass**

in dem Bestimmungsschritt (S03) die gespeicherten Echtzeit-Indexdaten einzeln mit einem voreingestellten Sicherheitsschwellenwert verglichen werden und, wenn bestimmte Echtzeit-Indexdaten eine voreingestellte Auslösebedingung für eine Dienstgüteanpassung erfüllen, bestimmt wird, ob die gespeicherten Daten ausgehend von den Echtzeit-Indexdaten innerhalb von m aufeinanderfolgenden Datenerfassungszyklen eine voreingestellte Dienstgütewiederherstellungsbedingung erfüllen, und, falls die Dienstgütewiederherstellungsbedingung nicht erfüllt ist, bestimmt wird, ob die Daten innerhalb der ersten n Datenerfassungszyklen der m Datenerfassungszyklen eine voreingestellte Dienstgüteherabsetzungsbedingung erfüllen, wobei sowohl m als auch n positive ganze Zahlen sind und $m \geq n$; und
in dem Dienstgüteanpassungsschritt (S04) die Dienstgüte der Einschaltvorrichtung (200a, 200b) wiederhergestellt wird, wenn in dem Bestimmungsschritt (S03) bestimmt wird, dass die Dienstgütewiederherstellungsbedingung erfüllt ist, die Dienstgüte der Einschaltvorrichtung (200a, 200b) herabgesetzt wird, wenn in dem Bestimmungsschritt (S03) bestimmt wird, dass die Dienstgütewiederherstellungsbedingung nicht erfüllt ist, aber die Dienstgüteherabsetzungsbedingung erfüllt ist, und die Dienstgüte der Einschaltvorrichtung (200a, 200b) aufrechterhalten wird, so wie sie ist, wenn in dem Bestimmungsschritt (S03) bestimmt wird, dass weder die Dienstgütewiederherstellungsbedingung noch die Dienstgüteherabsetzungsbedingung erfüllt ist.

**7.** Dienstunterstützungsverfahren nach Anspruch 6, **dadurch gekennzeichnet, dass**
in dem Dienstgüteanpassungsschritt (S04) die Dienstgüte der Einschaltvorrichtung (200a, 200b) aufrechterhalten wird, so wie sie ist, wenn in dem Bestimmungsschritt (S03) bestimmt wird, dass die Dienstgütewiederherstellungsbedingung erfüllt ist und die aktuelle Dienstgüte der Einschaltvorrichtung (200a, 200b) die höchste Dienstgüte ist, die nicht mehr weiter verbessert werden kann.

**8.** Dienstunterstützungsverfahren nach Anspruch 6, **dadurch gekennzeichnet, dass**
in dem Dienstgüteanpassungsschritt (S04) der Dienst der Einschaltvorrichtung (200a, 200b) beendet wird, wenn in dem Bestimmungsschritt (S03) bestimmt wird, dass die Dienstgüteherabsetzungsbedingung erfüllt ist und die aktuelle Dienstgüte der Einschaltvorrichtung (200a, 200b) die niedrigste Dienstgüte ist, die nicht mehr weiter herabgesetzt werden kann.

**Revendications**

**1.** Système de support de service (100) pour un dispositif de mise sous tension (200a, 200b), **caractérisé en ce qu'**il comprend :

une unité de réception (101) configurée pour recevoir des données d'index en temps réel du dispositif de mise sous tension (200a, 200b) qui sont collectées, à une certaine fréquence, du dispositif de mise sous tension (200a, 200b), dans lequel les données d'index en temps réel comprennent une température d'une zone de batterie du dispositif de mise sous tension et une puissance du dispositif de mise sous tension ;
une unité de stockage (102) configurée pour stocker les données d'index en temps réel reçues par l'unité de réception (101) ;
une unité de détermination (103) configurée pour déterminer, sur la base des données d'index en temps réel stockées dans l'unité de stockage (102), si une condition de réglage intelligent de niveau de service est obtenue ; et
une unité de réglage de niveau de service (104) configurée pour régler de façon intelligente le niveau de service du dispositif de mise sous tension (200a, 200b) sur la base d'un résultat de détermination de l'unité de détermination (103), ainsi réglant un nombre de batteries desservies par le dispositif de mise sous tension (200a, 200b).

**2.** Système de support de service selon la revendication 1, **caractérisé en ce que**

l'unité de détermination (103) est configurée pour comparer les données d'index en temps réel stockées dans l'unité de stockage (102) individuellement à un seuil de sécurité prédéfini, et déterminer, lorsque de certaines données d'index en temps réel respectent une condition prédéfinie de déclenchement de réglage de niveau de service, si les données stockées dans l'unité de stockage (102) et, en commençant à partir des données d'index en temps réel dans les limites de m cycles de collecte de données consécutifs, respectent une condition prédéfinie de reprise de niveau de service, et, si la condition de reprise de niveau de service n'est pas respectée, déterminer si les données dans les limites des a premiers cycles de collecte de données des m cycles de collecte de données respectent une condition prédéfinie d'abaissement de niveau de service, où m et n sont tous les deux des nombre entiers positifs et m ≥ n ; et l'unité de réglage de niveau de service (104) est configurée pour reprendre le niveau de service du dispositif de mise sous tension (200a, 200b) lorsque l'unité de détermination (103) détermine que la condition de reprise de niveau de service est respectée, abaisser le niveau de service du dispositif de mise sous tension (200a, 200b) lorsque l'unité de détermination (103) détermine que la condition de reprise de niveau de service n'est pas respectée mais la condition d'abaissement de niveau de service est respectée, et maintenir le niveau de service du dispositif de mise sous tension (200a, 200b) tel qu'il est lorsque l'unité de détermination (103) détermine que ni la condition de reprise de niveau de service ni la condition d'abaissement de niveau de service ne sont respectées.

3. Système de support de service selon la revendication 2, **caractérisé en ce que**
l'unité de réglage de niveau de service (104) est configuré pour maintenir, lorsque l'unité de détermination (103) détermine que la condition de reprise de niveau de service est respectée et le niveau de service actuel du dispositif de mise sous tension (200a, 200b) est le niveau de service le plus haut qui ne peut pas être amélioré davantage, le niveau de service du dispositif de mise sous tension (200a, 200b) tel qu'il est.

4. Système de support de service selon la revendication 2, **caractérisé en ce que**
l'unité de réglage de niveau de service (104) est configurée pour mettre à l'arrêt, lorsque l'unité de détermination (103) détermine que la condition d'abaissement de niveau de service est respectée et le niveau de service actuel du dispositif de mise sous tension (200a, 200b) est le niveau de service le plus bas qui ne peut pas être abaissé davantage, le service du dispositif de mise sous tension (200a, 200b).

5. Procédé de support de service pour un dispositif de mise sous tension (200a, 200b), **caractérisé en ce qu'**il comprend :

une étape de réception (S01) pour recevoir des données d'index en temps réel du dispositif de mise sous tension (200a, 200b) qui sont collectées, à une certaine fréquence, du dispositif de mise sous tension (200a, 200b), dans lequel les données d'index en temps réel comprennent une température d'une zone de batterie du dispositif de mise sous tension et une puissance du dispositif de mise sous tension ; une étape de stockage (S02) pour stocker les données d'index en temps réel reçues dans l'étape de réception (S01) ;
une étape de détermination (S03) pour déterminer, sur la base des données d'index en temps réel stockées, si une condition de réglage intelligent de niveau de service est obtenue ; et
une étape de réglage de niveau de service (S04) pour régler de façon intelligente le niveau de service du dispositif de mise sous tension (200a, 200b) sur la base d'un résultat de détermination de l'étape de détermination (S03), ainsi réglant un nombre de batteries desservies par le dispositif de mise sous tension (200a, 200b).

6. Procédé de support de service selon la revendication 5, **caractérisé en ce que**

dans l'étape de détermination (S03), les données d'index en temps réel stockées sont comparées individuellement à un seuil de sécurité prédéfini, et lorsque de certaines données d'index en temps réel respectent une condition prédéfinie de déclenchement de réglage de niveau de service, il est déterminé si les données stockées, en commençant à partir des données d'index en temps réel dans les limites de m cycles de collecte de données consécutifs, respectent une condition prédéfinie de reprise de niveau de service, et, si la condition de reprise de niveau de service n'est pas respectée, il est déterminé si les données dans les limites des n premiers cycles de collecte de données des m cycles de collecte de données respectent une condition prédéfinie d'abaissement de niveau de service, où m et n sont tous les deux des nombre entiers positifs et m ≥ n ; et
dans l'étape de réglage de niveau de service (S04), le niveau de service du dispositif de mise sous tension (200a, 200b) est repris lorsqu'il est déterminé dans l'étape de détermination (S03) que la condition de reprise de niveau de service est respectée, le niveau de service du dispositif de mise sous tension (200a, 200b) est abaissé lorsqu'il est déterminé dans l'étape de détermination (S03) que la condition de reprise de niveau de service n'est pas respectée mais la condition d'abaissement de niveau de service est respectée, et le niveau de service du dispositif de mise sous tension (200a, 200b) est maintenu tel qu'il est lorsqu'il est déterminé dans l'étape de détermination (S03) que ni la condition de reprise de niveau de service ni la condition d'abaissement de niveau de service ne sont respectée.

7. Procédé de support de service selon la revendication 6, **caractérisé en ce que**
dans l'étape de réglage de niveau de service (S04), lorsqu'il est déterminé dans l'étape de détermination (S03) que la condition de reprise de niveau de service est respectée et le niveau de service actuel du dispositif de mise sous tension (200a, 200b) est le niveau de service le plus haut qui ne peut pas être amélioré davantage, le niveau de service du dispositif de mise sous tension (200a, 200b) est maintenu tel qu'il est.

8. Procédé de support de service selon la revendication 6, **caractérisé en ce que**
dans l'étape de réglage de niveau de service (S04), lorsqu'il est déterminé dans l'étape de détermination (S03) que la condition d'abaissement de niveau de service est respectée et le niveau de service actuel du dispositif de mise sous tension (200a, 200b) est le niveau de service le plus bas qui ne peut pas être abaissé davantage, le service du dispositif de mise sous tension (200a, 200b) est mis à l'arrêt.

**1000**

*FIG. 1*

**100**

*FIG. 2*

| Data collection step | S21 |

| Sending step | S22 |

| Receiving step | S01 |

| Storage step | S02 |

| Determination step | S03 |

| Service level adjustment step | S04 |

**S1000**

*FIG. 3*

```
┌─────────────────┐
│ Receiving real-time │  S01
│   index data        │
└─────────────────┘
         │
         ▼
┌─────────────────┐
│ Storing the real-time │  S02
│    index data         │
└─────────────────┘
```

┌─────────────────┐
│ Comparing the real-time │  S031
│ index data individually with │
│   a safety threshold    │
└─────────────────┘

S032   Is there any real-time index   No
data that meets a service level adjustment
        trigger condition?

S03

Yes

S033   Does data starting   No   S036   Does data within   No   Outputting a   S038
from the real-time index data within m consecutive        the first n data collection cycles of the m data        determination result
data collection cycles meet a service        collection cycles meet a service level
level recovery condition?        degradation condition?

Yes                                    Yes

┌─────────────────┐              ┌─────────────────┐              ┌─────────────────┐
│ Outputting a    │  S034        │ Outputting a    │  S037        │ Maintaining the level as it is │  S043
│ determination result │         │ determination result │         └─────────────────┘
└─────────────────┘              └─────────────────┘

┌─────────────────┐              ┌─────────────────┐
│ Recovering the level or │  S041 │ Degrading the level or │  S042
│ maintaining the level as it is │ │ shutting down the device │
└─────────────────┘              └─────────────────┘

S04

*FIG. 4*

19

C100

FIG. 5

**REFERENCES CITED IN THE DESCRIPTION**

**Patent documents cited in the description**

- US 20130141040 A1
- US 20110298417 A1